# EUROPÄISCHE PATENTSCHRIFT

(11) **EP 2 175 070 B1**
(45) Veröffentlichungstag und Bekanntmachung des Hinweises auf die Patenterteilung: **05.03.2014**
(21) Anmeldenummer: 09012493.4
(22) Anmeldetag: 02.10.2009
(51) Int. Cl.: E01C 23/088, E06C 5/04, B60R 3/02

(54) **Straßenfräsmaschine**
Road milling machine
Fraiseuse de route

(30) Priorität: 09.10.2008 DE 202008013393 U
(43) Veröffentlichungstag der Anmeldung: 14.04.2010
(73) Patentinhaber: Wirtgen GmbH, 53578 Windhagen (DE)
(72) Erfinder: Kramer, Thomas, 50670 Köln (DE); Berning, Chistian, 53909 Zülpich (DE); Busley, Peter, 53545 Linz/Rhein (DE)
(74) Vertreter: Oppermann, Frank

(56) Entgegenhaltungen:
- EP-A2- 1 978 157
- WO-A1-2007/062464
- US-A- 3 190 392
- US-A- 5 046 582
- US-A- 5 988 316

## Beschreibung

Die Erfindung betrifft eine Straßenfräsmaschine.

Es sind Baumaschinen unterschiedlicher Ausbildung für den Hoch- oder Tiefbau bekannt. Für den Bau von Straßen werden selbstfahrende Straßenbaumaschinen eingesetzt, zu denen beispielsweise die bekannten Straßenfräsmaschinen gehören. Die bekannten Straßenfräsmaschinen verfügen über einen Fahrstand für den Fahrer der Maschine.

Aufgrund der verhältnismäßig großen Abmessungen von Straßenfräsmaschinen ist der Fahrstand relativ hoch über dem Boden angeordnet. Zum Besteigen des Fahrstandes verfügen die Straßenfräsmaschinen daher über eine Leiter, die an einer Seite des Maschinenrahmens unterhalb des Fahrstandes angeordnet ist. Um den Aufstieg zum Fahrstand zu erleichtern, sollte die Leiter möglichst bis nahe an den Boden reichen. Weiterhin sollte die Leiter einen ausreichenden Abstand von dem Maschinenrahmen haben, damit nicht die Gefahr besteht, dass der Maschinenführer beim Aufstieg zum Fahrstand mit möglicherweise sogar beweglichen Teilen der Maschine in Berührung kommt.

Eine Leiter ist grundsätzlich insofern nachteilig, als die Leiter die Transportbreite der Maschine vergrößert. Dies ist insbesondere dann der Fall, wenn die Leiter aus Gründen der Sicherheit in ausreichendem Abstand zum Maschinenrahmen angeordnet ist.

Nachteilig ist auch, dass die seitlich am Maschinenrahmen angeordnete Leiter den Arbeitsbereich der Maschine grundsätzlich eingeschränkt. Selbst wenn die Maschine einen ausreichenden Abstand zu seitlichen Begrenzungen, beispielweise einer Wand oder dgl. hält, besteht zudem noch die Gefahr, dass die Leiter an plötzlich innerhalb des Arbeitsbereichs auftretenden Hindernissen anstößt. Wenn dies der Fall ist, kann die Leiter aus der Verankerung gerissen oder sogar zerstört werden.

Es sind Straßenfräsmaschinen bekannt, bei denen das Problem der Verringerung der Transportbreite dadurch gelöst wird, dass die Leiter an dem Maschinenrahmen mit einer Parallelogrammführung befestigt ist. Die Parallelogrammführung erlaubt, die Leiter für den Transport der Maschine an den Maschinenrahmen anzuklappen, so dass die Transportbreite verringert ist. Nachteilig ist aber, dass die Parallelogrammführung einen relativ großen konstruktiven Aufwand erfordert.

Darüber hinaus sind Straßenfräsmaschinen bekannt, die über eine klappbare Leiter verfügen, die aus zwei gelenkig miteinander verbundenen Teilstücken besteht. An den beiden Holmen des oberen Teilstücks der Leiter sind über Drehgelenke die Holme des unteren Teilstücks der Leiter befestigt, so dass das untere Teilstück um eine in Fahrtrichtung verlaufende Achse schwenkbar ist. Bei hochgeklappter Leiter ist der Arbeitsbereich der Maschine nicht eingeschränkt, und es besteht auch nicht die Gefahr, dass die Leiter an Hindernissen anstößt. Das Hochklappen der Leiter ist aber für den auf dem Fahrstand befindlichen Maschinenführer nicht ohne weiteres möglich, auch wenn das untere Teilstück der Leiter vom Boden aus noch problemlos hochgeklappt werden könnte. Wenn die Leiter aber nicht hochgeklappt ist, besteht weiterhin die Gefahr der Beschädigung der Leiter an plötzlich auftretenden Hindernissen.

Aus der EP 1 978 157 A2 ist eine Straßenfräsmaschine bekannt, die über einen Maschinenrahmen und ein Fahrwerk verfügt, das an der Vorder- und Rückseite des Maschinenrahmens angeordnete Kettenlaufwerke aufweist. Unterhalb des Maschinenrahmens ist die Fräseinrichtung der Straßenfräsmaschine angeordnet. Der Fahrstand ist über eine feststehende Leiter für den Maschinenführer zugänglich, die am Maschinenrahmen befestigt ist.

Die WO 2007/062464 A1 beschreibt einen Bagger, der über einen Ausleger mit einem Löffel zum Lösen und Bewegen von Erdreich verfügt. Der Bagger, der keine festgelegte Fahrt- und Arbeitsrichtung hat, weist einen drehbar am Fahrwerk gelagerten Oberwagen auf, an dem der Ausleger befestigt ist. Aus der drehbaren Lagerung des Oberwagens mit dem Fahrstand ergibt sich das Problem, dass eine Leiter, die sich unterhalb des Fahrstandes befände, beim Drehen des Oberwagens an den Kettenlaufwerken anschlagen würde. Daher schlägt die WO 2007/062464 A1 vor, die Leiter am Oberwagen gelenkig zu befestigen, so dass die Leiter für den Betrieb der Maschine hochgeklappt werden kann.

Die US 5 988 316 A beschreibt eine Kettenraupe, die über eine schwenkbare Leiter verfügt, und schlägt vor, die Leiter während des Betriebs der Maschine mit einer automatischen Schwenkeinrichtung hochzuklappen. Diese Schwenkeinrichtung umfasst eine Kolben-Zylinderanordnung, die von einer Steuereinheit betätigt wird. Wenn die Leiter während des Betriebs der Maschine ausgeklappt sein sollte, was aber nicht der Fall sein soll, würde die Kolben-Zylinderanordnung verhindern, dass sich die Leiter beim Anschlagen an ein Hindernis bewegt. Insofern ist die Leiter in der ausgeklappten Position festgestellt, was jegliche Ausweichbewegung unmöglich macht.

Der Erfindung liegt die Aufgabe zu Grunde, eine Straßenfräsmaschine mit einer kostengünstig herstellbaren Leiter für den Fahrstand zu schaffen, die sich besonders einfach handhaben lässt.

Die Lösung dieser Aufgabe erfolgt erfindungsgemäß mit den Merkmalen des Patentanspruchs 1. Vorteilhafter Ausführungsformen der Erfindung sind Gegenstand der Unteransprüche.

Bei der erfindungsgemäßen Straßenfräsmaschine ist die Leiter an einer oder beiden Längsseiten des Maschinenrahmens um eine im Wesentlichen quer zur Fahrtrichtung verlaufende Schwenkachse schwenkbar gelagert. Damit kann die Leiter hochgeklappt werden, um den Arbeitsbereich der Maschine zu verbreitern. Für den Fall aber, dass die Leiter während des Arbeitseinsatzes der Maschine nicht hochgeklappt sein sollte, kann die Leiter an plötzlich im Arbeitsbereich auftretenden Hindernissen nicht beschädigt werden. Wenn die Leiter an einem Hindernis anschlagen sollte, kann die Leiter dem Hindernis ausweichen, indem die Leiter aus der vertikalen Position verschwenkt wird. Dabei wird der unterhalb der Schwenkachse liegende Abschnitt der Leiter aus der vertikalen Position entgegen der Fahrtrichtung verschwenkt.

Ein weiterer Vorteil der schwenkbaren Leiter der erfindungsgemäßen Straßenfräsmaschine liegt darin, dass sich die Leiter nicht nur vom Boden, sondern auch vom Fahrstand aus leicht hochklappen bzw. herunterklappen lässt.

Die Leiter kann aus einem oder mehreren Teilstücken bestehen. Die Leiter selbst kann auch eine zusammenklappbare Leiter sein. Allein entscheidend ist, dass die Leiter am Maschinenrahmen um eine im Wesentlichen quer zur Fahrtrichtung verlaufende Achse schwenkbar gelagert ist.

Eine bevorzugte Ausführungsform sieht vor, dass die im Wesentlichen quer zur Fahrtrichtung verlaufende Schwenkachse gegenüber der vertikalen Längsseite des Maschinenrahmens aus der Horizontalen heraus so schräggestellt ist, dass die Leiter gegenüber der Längsseite des Maschinenrahmens geneigt ist, d.h. die Leiter an die Seitenwand des Maschinenrahmens angestellt ist. Dabei kann die Schwenkachse der Leiter orthogonal auf der Ebene stehen, die von der Leiter aufgespannt wird. Dadurch wird zum Einen erreicht, dass die Leiter in der vertikalen Position gegenüber dem vertikalen Maschinenrahmen in Aufstiegsrichtung nach vorne geneigt ist, wodurch unter ergonomischen Gesichtspunkten der Aufstieg einfacher ist. Zum Anderen wird dadurch erreicht, dass die Leiter in der vertikalen Position einen ausreichenden Abstand insbesondere zu den meist beweglichen Teilen der Maschine hat, die im unteren Bereich an der Längsseite des Maschinenrahmens angeordnet sind. Eine konstruktiv aufwändige Parallelogrammführung zur Vergrößerung des Abstandes zwischen Leiter und Maschinenrahmen ist somit nicht erforderlich. Folglich ist der konstruktive Aufwand relativ gering.

Eine alternative Ausführungsform sieht vor, dass nicht die im Wesentlichen quer zur Fahrtrichtung verlaufende Schwenkachse gegenüber der vertikalen Längsseite des Maschinenrahmens schräggestellt ist, sondern die um die Schwenkachse schwenkbare Leiter derart angeordnet ist, dass die Schwenkachse nicht orthogonal auf der von der Leiter aufgespannten Ebene steht, sondern die Schwenkachse gegenüber der Ebene der Leiter so schräggestellt ist, dass die Leiter in der vertikalen Position gegenüber der Längsseite des Maschinenrahmens geneigt ist.

Eine weitere besonders bevorzugte Ausführungsform sieht für die Befestigung der Leiter an der Längsseite des Maschinenrahmens eine Gelenkverbindung mit zwei Gelenkteilen vor, die um eine im Wesentlichen quer zur Fahrtrichtung verlaufende Drehachse drehbar sind, wobei der Maschinenrahmen das eine Gelenkteil und die Leiter das andere Gelenkteil aufweist.

Die Drehachse der Gelenkverbindung kann dabei wieder gegenüber einer Längsseite des Maschinenrahmens schräggestellt sein, so dass die Leiter gegenüber der Längsseite des Maschinenrahmens geneigt ist. Auch ist es wieder möglich, die Gelenkverbindung derart anzuordnen, dass die Drehachse senkrecht auf dem Maschinenrahmen steht, wobei aber dann die Leiter an dem leiterseitigen Gelenkteil derart anzuordnen ist, dass die Leiter gegenüber dem Maschinerahmen geneigt ist.

Eine Schrägstellung der Leiter gegenüber dem Maschinenrahmen in der vertikalen Position hat grundsätzlich den Nachteil, dass die Leiter sich beim Verschwenken nicht in einer Ebene bewegt, die parallel zu der Längsseite des Maschinerahmens verläuft. Daher besteht grundsätzlich die Gefahr, dass die Leiter beim Verschwenken an Teilen des Maschinenrahmen anstößt. Eine weitere besonders bevorzugte Ausführungsform sieht daher vor, dass die Drehachse der Gelenkverbindung gegenüber der Längsseite des Maschinenrahmens schräggestellt ist, wobei das Gelenkteil der Leiter derart an der Leiter angeordnet ist, dass die Schwenkachse schräg auf der von der Leiter aufgespannten Ebene steht. Dadurch wird erreicht, dass die Leiter beim Verschwenken einen ausreichenden Bewegungsspielraum hat, aber andererseits auch nicht zu weit vom Maschinenrahmen absteht, so dass die maximal zulässige Transportbreite der Maschine eingehalten wird.

Die Leiter ist an einer Längsseite des Maschinenrahmens vorzugsweise aus der vertikalen Position um einen rechten Winkel drehbar gelagert, so dass die Leiter aus der vertikalen Position in eine horizontale Position schwenkbar ist. In der Praxis kann es aber genügen, die Leiter um einen kleineren Winkel schwenkbar am Maschinenrahmen zu lagern, um im Arbeitsbereich auftretenden Hindernissen ausweichen zu können.

Die Leiter ist vorzugsweise in die horizontale Position und/oder vertikale Position federnd vorgespannt, wodurch die Schwenkbewegung der Leiter in eine, in die andere oder in beide Positionen erleichtert wird. Vorzugsweise ist die Leiter in die horizontale Position und/oder vertikale Position mit einer Gasdruckfeder federnd vorgespannt, die eine Schwenkbewegung in beide Richtungen unterstützt, wobei der Totpunkt der Gasdruckfeder derart gewählt werden kann, dass die Leiter in eine der beiden Richtungen stärker vorgespannt ist bzw. die Schwenkbewegung in eine der beiden Richtungen früher unterstützt wird.

Bei einer weiteren bevorzugten Ausführungsform weist zumindest ein Teilstück der Leiter einen in Fahrtrichtung vorderen Holm und einen in Fahrrichtung hinteren Holm auf, an denen Sprossen befestigt sind. Die Leiter kann grundsätzlich aber auch als Einholmleiter ausgebildet sein.

Eine weitere bevorzugte Ausführungsform sieht vor, dass der in Fahrtrichtung vordere Holm der Leiter an einer Längsseite des Maschinenrahmens schwenkbar befestigt ist, während der in Fahrtrichtung hintere Holm der Leiter ein Anschlagelement aufweist, das sich in der vertikalen Position der Leiter auf einem Stützelement abstützt, das an der Längsseite des Maschinenrahmens befestigt ist. Dadurch wird erreicht, dass die Leiter beim Besteigen sicher am Maschinenrahmen festgelegt ist, beim Anschlagen an ein Hindernis bei Vorwärtsfahrt aber jederzeit um eine quer zur Fahrtrichtung verlaufende Achse verschwenkbar ist.

Bei einer weiteren besonders bevorzugten Ausführungsform besteht die Leiter aus einem oberen und einem unteren Teilstück, wobei das untere Teilstück um eine im Wesentlichen quer zur Fahrtrichtung verlaufende Achse an dem oberen Teilstück in der gleichen Ebene wie das obere Teilstück schwenkbar befestigt ist. Dadurch lässt sich die Leiter einfach zusammenklappen, ohne dass die Leiter nach außen absteht.

Das obere Teilstück der Leiter ist vorzugsweise als Zweiholmleiter mit einem in Fahrtrichtung vorderen und hinteren Holm ausgebildet, an denen Sprossen befestigt sind. Dabei ist vorteilhaft, wenn die Schwenkachse des unteren Teilstücks der Leiter an dem in Fahrtrichtung hinteren Holm des oberen Teilstücks der Leiter angeordnet ist, so dass das untere Teilstück der Leiter beim Anschlagen an ein Hindernis bei Rückwärtsfahrt verschwenkt wird.

Das unter Teilstück der Leiter ist vorzugsweise als Einholmleiter mit einer an einem Holm befestigten Sprosse ausgebildet. Vorzugsweise ist der Holm des unteren Teilstücks aus einer ausgeklappten Position in eine an das obere Teilstück angeklappte Position schwenkbar, in der die Sprosse des unteren Teilstücks an dem anderen der beiden Holme des oberen Teilstücks anliegt.

Eine besonders kompakte Bauform kann dadurch erreicht werden, dass der untere Abschnitt des Holms des oberen Teilstücks der Leiter, an dem die Sprosse des unteren Teilstücks in der eingeklappten Position anliegt, schräg zu dem anderen Holm des oberen Teilstücks verläuft, so dass die an den Holm des oberen Teilstücks angeklappte Sprosse des unteren Teilstücks nicht seitlich übersteht.

Das untere Teilstück der Leiter wird in der ausgeklappten Position sicher durch ein Anschlagelement gehalten, das sich an dem oberen Teilstück der Leiter abstützt. In der eingeklappten Position kann das untere Teilstück der Leiter vorzugsweise mit einem Befestigungselement an dem oberen Teilstück arretiert werden. Das Befestigungselement kann ein das untere Teilstück in der eingeklappten Position einschnappend oder einrastend festlegendes Befestigungselement sein, das sich zum Ausklappen des unteren Teilstücks leicht lösen lässt.

Um den Aufstieg zum Fahrerstand zu erleichtern, weist die Leiter vorzugsweise ein in der vertikalen Position über die Leiter nach oben hinausragendes Halteelemente auf, mit dem sich der Maschinenführer beim Besteigen der Leiter festhalten kann. Das Halteelement kann unterschiedlich ausgebildet sein. Es kann auch der Sicherung vor einem seitlichen Absturz dienen. Neben der Sicherungsfunktion kann das Halteelement gleichsam als Hebel zum Verschwenken der Leiter aus der vertikalen in die horizontale Position oder umgekehrt dienen.

Im Folgenden wird ein Ausführungsbeispiel der Erfindung unter Bezugnahme auf die Zeichnungen näher erläutert.

### Es zeigen:

- Fig. 1: ein Ausführungsbeispiel einer Straßenfräsmaschine in vereinfachter Darstellung,
- Fig. 2: ein Ausführungsbeispiel der erfindungsgemäßen Leiter für die Straßenfräsmaschine in der Frontansicht, wobei das untere Teilstück der Leiter ausgeklappt ist,
- Fig. 3: die Leiter in der Frontansicht, wobei das untere Teilstück der Leiter an das obere Teilstück angeklappt ist,
- Fig. 4: die Leiter in der Seitenansicht, wobei das untere Teilstück der Leiter eingeklappt ist,
- Fig. 5: die Leiter in der Draufsicht, wobei das untere Teilstück der Leiter eingeklappt ist,
- Fig. 6: die Leiter in der Seitenansicht, wobei die Leiter hochgeklappt und das untere Teilstück der Leiter eingeklappt ist und

- Fig. 7: die Leiter in der Draufsicht, wobei die Leiter hochgeklappt und das untere Teilstück der Leiter eingeklappt ist.

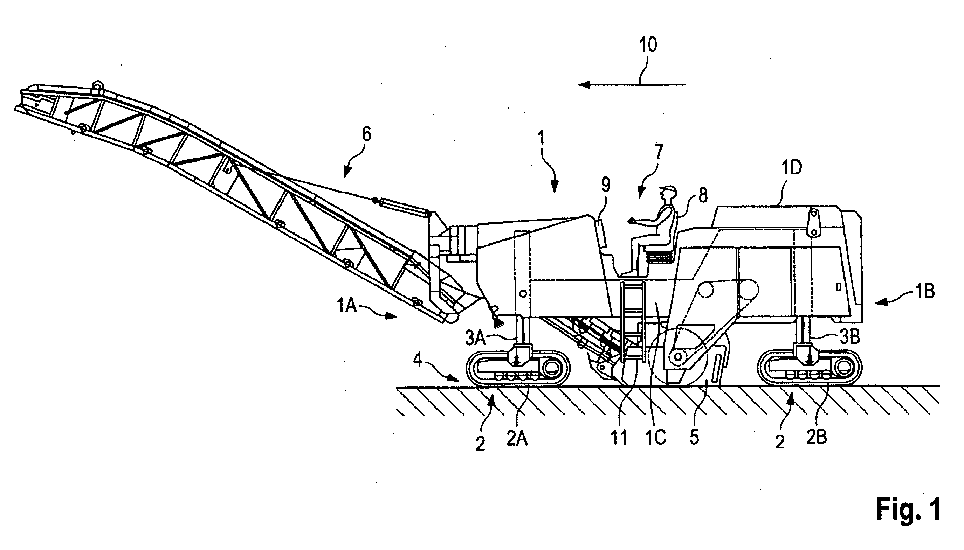

Fig. 1 zeigt die wesentlichen Komponenten einer Straßenfräsmaschine, die über einen Fahrstand verfügt. Die Straßenfräsmaschine weist einen Maschinenrahmen 1 und ein Fahrwerk 2 auf. Das Fahrwerk 2 der Fräsmaschine umfasst vier Kettenlaufwerke 2A, 2B, die an der Vorder- und Rückseite auf beiden Seiten des Maschinenrahmens 1 angeordnet sind. Maschinenrahmen 1 und Fahrwerk 2 sind mittels Kolben/Zylinder-Anordnungen 3A, 3B miteinander verbunden, so dass jedes Kettenlaufwerk höhenverstellbar ist.

Der Maschinenrahmen 1 der Fräsmaschine trägt eine unterhalb des Maschinenrahmens angeordnete Fräseinrichtung 5 und eine an der Vorderseite des Maschinenrahmens angeordnete Fördereinrichtung 6 für das abgefräste Fräsgut.

Der Fahrstand 7 der Fräsmaschine befindet sich oberhalb der zu bearbeitenden Fläche in der Mitte des Maschinenrahmens 1. Der Maschinenführer sitzt am Fahrstand auf einem Fahrersitz 8 vor den Bedienelementen 9.

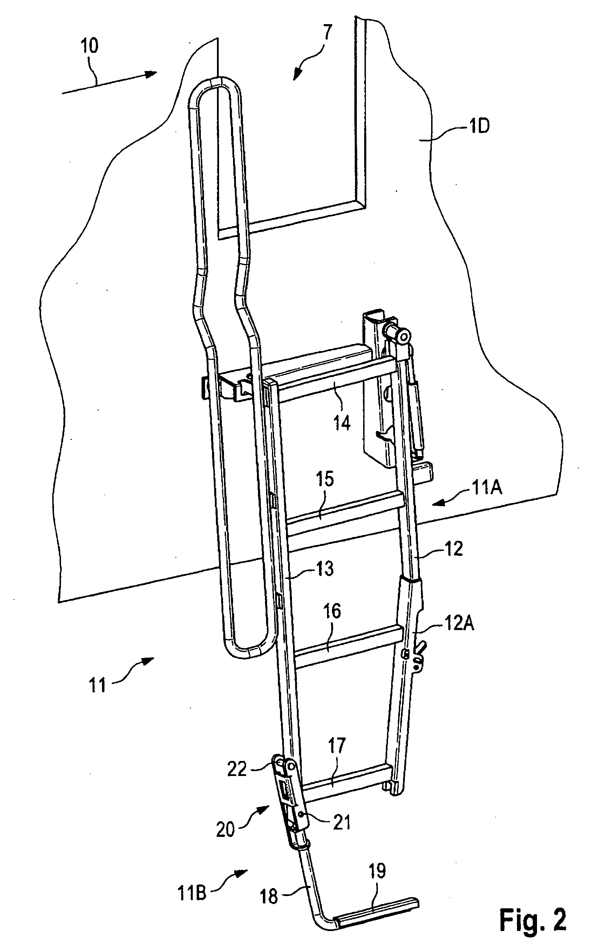

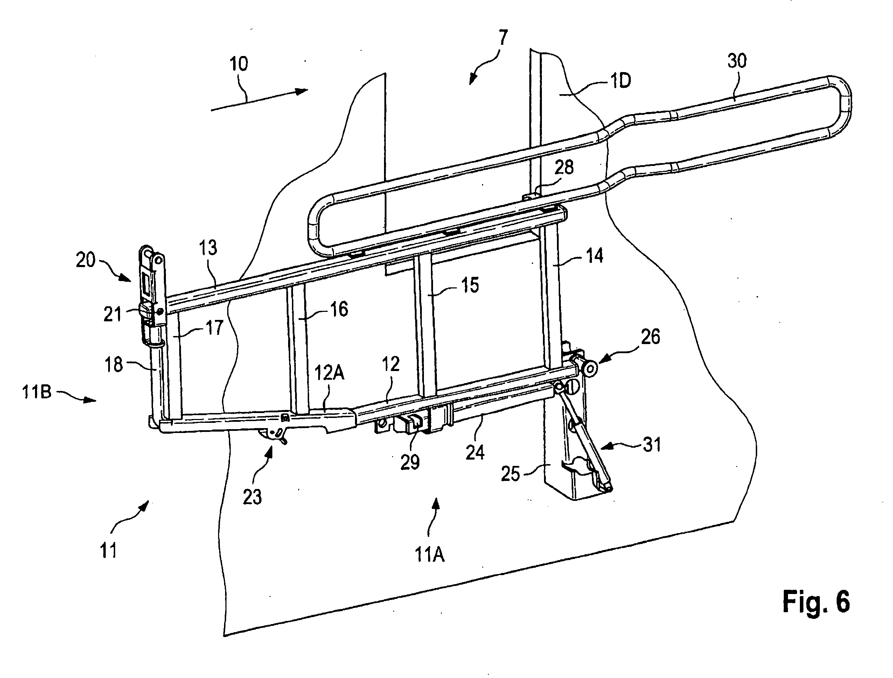

Der Maschinenrahmen 1 weist eine in Fahrtrichtung 10 vordere Seite 1A, eine Rückseite 1B sowie zwei Längsseiten 1C, 1D auf. An mindestens einer der beiden Längsseiten 1C oder 1D des Maschinenrahmens 1 ist unterhalb des Fahrstandes 7 eine Leiter 11 befestigt, so dass der Maschinenführer den Fahrstand leicht besteigen kann. Fig. 1 zeigt eine Ausführungsform, bei der die nur andeutungsweise dargestellte Leiter 11 sich auf der in Fahrtrichtung 10 linken Seite befindet. Die Leiter 11 wird nachfolgend unter Bezugnahme auf die Figuren 2 bis 7 im Einzelnen beschrieben.

Fig. 2 zeigt die an der Längsseite 1D des Maschinenrahmens 1 angebrachte Leiter 11 in der Frontansicht. Die Leiter 11 erstreckt sich von dem Einstieg für den Fahrerstand 7 bis nahe an den Boden. Fig. 1 zeigt die Leiter in der vertikalen Position. Die Leiter kann aus der vertikalen Position vom Maschinenführer um 90° in eine horizontale Position unabhängig davon verschwenkt werden, ob der Maschineführer auf dem Boden neben der Maschine steht oder sich auf dem Fahrstand 7 befindet.

Der Maschinenführer wird die Leiter in die horizontale Position schwenken, wenn der Arbeitsbereich der Maschine seitlich erweitert werden soll, beispielsweise bis nahe an eine angrenzende Wand gefräst werden soll, oder wenn ein Transport ansteht. Auch wenn Hindernisse zu erwarten sind, wird der Maschinenführer die Leiter in die horizontale Position verschwenken. Selbst wenn der Maschinenführer die Leiter aber nicht in die horizontale Position verschwenkt hat, kann die Leiter einem plötzlich auftretenden Hindernis dadurch ausweichen, dass sie beim Anschlagen an das Hindernis entgegen der Fahrtrichtung aus der vertikalen Position verschwenkt wird.

Die Leiter 11 weist ein oberes Teilstück 11A und ein unteres Teilstück 11B auf. Das obere Teilstück 11A der Leiter 11 weist einen in Fahrtrichtung 10 vorderen Holm 12 und einen in Fahrtrichtung hinteren Holm 13 auf, an denen vier Sprossen 14, 15, 16, 17 befestigt sind, wobei das untere Teilstück 11B der Leiter 11 nur einen in Fahrtrichtung hinteren Holm 18 und nur eine Sprosse 19 aufweist.

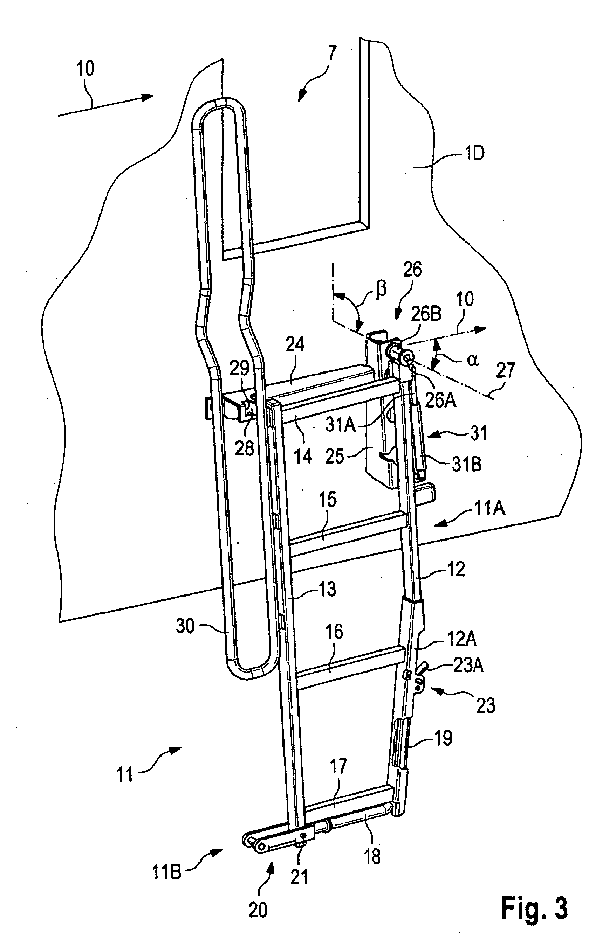

Das untere Teilstück 11B der Leiter kann aus der in Fig. 2 gezeigten Position in die in Fig. 3 gezeigte Position hochgeklappt werden. Der Maschinenführer wird das untere Teilstück 11B der Leiter 11 hochklappen, wenn beispielsweise nahe an einem Bordstein gefräst werden soll. Damit erübrigt sich, die komplette Leiter 11 hochzuklappen. Auch wenn nur kleine Hindernisse zu erwarten sind, wird nur das untere Teilstück 11B hochgeklappt. Sollte das unter Teilstück allerdings nicht hochgeklappt sein, kann bei Rückwärtsfahrt nur das untere Teilstück der Leiter verschwenkt werden, wenn die Leiter mit dem unteren Teilstück an einem Hindernis anschlägt.

Das obere Ende des Holms 18 des unteren Teilstücks 11B der Leiter 11 ist an dem unteren Ende des hinteren Holms 13 des oberen Teilstücks 11A der Leiter 11 mit einer Gelenkverbindung 20 um eine Achse 21 schwenkbar gelagert, die senkrecht zu einer Ebene verläuft, in der die Holme und Sprossen der Leiter 11 liegen. In der ausgeklappten Position stützt sich das untere Teilstück 11B mit einem Anschlagelement 22 seitlich an dem unteren Abschnitt des hinteren Holms 13 des oberen Teilstücks 11A ab.

Wenn das untere Teilstück 11B der Leiter 11 hochgeklappt wird, liegt der Holm 18 des unteren Teilstücks 11B an der unteren Sprosse 17 des oberen Teilstück 11A und die Sprosse 19 des unteren Teilstücks 11B an dem unteren Abschnitt des vorderen Holms 12 des oberen Teilstücks 11A der Leiter 11 an (Fig. 3). In der eingeklappten Position kann das untere Teilstück 11B der Leiter 11 an dem oberen Teilstück 11A mit einem Befestigungselement 23 befestigt werden, das an dem unteren Abschnitt 12A des vorderen Holms 12 des oberen Teilstücks 11A angeordnet ist. Dabei rastet das untere Teilstück 11B der Leiter 11 beim Hochklappen automatisch ein. Die Rastverbindung kann durch Betätigung eines Hebels 23A an dem Befestigungselement 23 wieder gelöst werden, so dass das untere Teilstück 11B durch sein Eigengewicht in die Ausgangslage zurückfällt.

Der untere Abschnitt 12A des vorderen Holms 12 des oberen Teilstücks 11A verläuft nach unten schräg auf den hinteren Holm 13 des oberen Teilstücks 11 A zu, so dass die Sprosse 19 des unteren Teilstücks 11B dicht an dem unteren Abschnitt 12A des vorderen Holms 12 anliegt oder von diesem aufgenommen wird.

Die Leiter 11 ist im Abstand zum Maschinenrahmen 1 an einer horizontalen Konsole 24 und an einer vertikalen Konsole 25 des Maschinenrahmens mit einer Gelenkverbindung 26 befestigt. Die Gelenkverbindung 26 weist zwei zueinander um eine Drehachse 27 drehbare Gelenkteile 26A und 26B auf, von denen das eine Gelenkteil 26A an der vertikalen Konsole 25 des Maschinenrahmens 1 und das andere Gelenkteil 26B an dem oberen Ende des vorderen Holms 12 des oberen Teilstücks 11A der Leiter 11 befestigt ist.

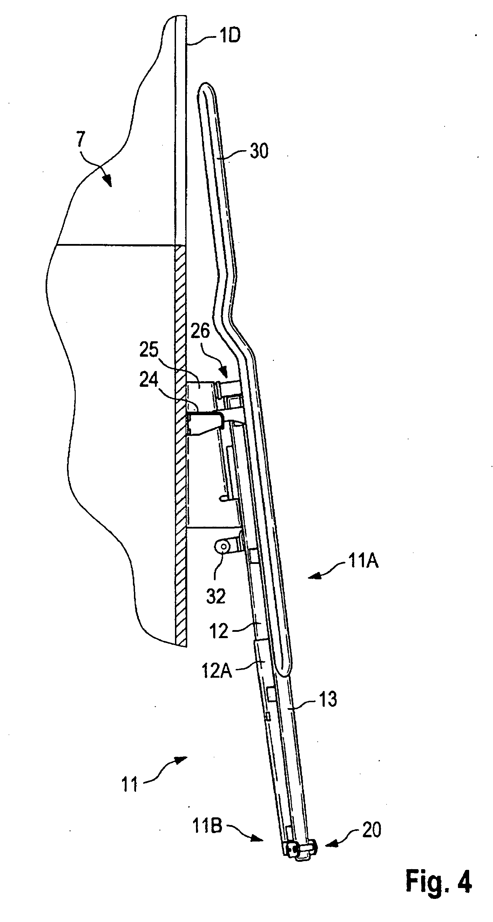

Die Drehachse 27 der Gelenkverbindung 26 bildet die Schwenkachse, um die sich die Leiter an dem Maschinenrahmen aus der vertikalen in die horizontale Position verschwenken lässt. Die Schwenkachse 27 schließt mit der vertikalen Seitenwand 1D des Maschinenrahmens 1 einen rechten Winkel α ein, d.h. die Schwenkachse verläuft quer zur Fahrtrichtung 10. Dabei ist die Schwenkachse 27 gegenüber der vertikalen Seitenwand 1D des Maschinenrahmens 1 um einen Winkel β schräggestellt, der kleiner als 90° ist, so dass die Leiter in der vertikalen Position gegenüber dem Maschinenrahmen geneigt ist (Fig. 3, Fig.4). Dadurch wird sichergestellt, dass ein ergonomischer Aufstieg und ein ausreichender Abstand zum Maschinenrahmen gegeben ist.

Die Schrägstellung der Schwenkachse 27 gegenüber dem Maschinenrahmen 1 um den Winkel β führt prinzipiell dazu, dass beim Verschwenken der Leiter 11 aus der vertikalen in die horizontale Position die Leiter 11 nicht parallel zu der Seitenwand 1D verläuft und nicht dicht an dem Maschinerahmen 1 anliegt, sondern die Leiter mit der Oberseite näher an der Seitenwand anliegt als mit der Unterseite. Daher besteht beim Verschwenken der Leiter die Gefahr, dass die Leiter am Maschinerahmen anschlägt. Im Übrigen erweist sich die Schrägstellung der hochgeklappten Leiter in der Praxis als störend.

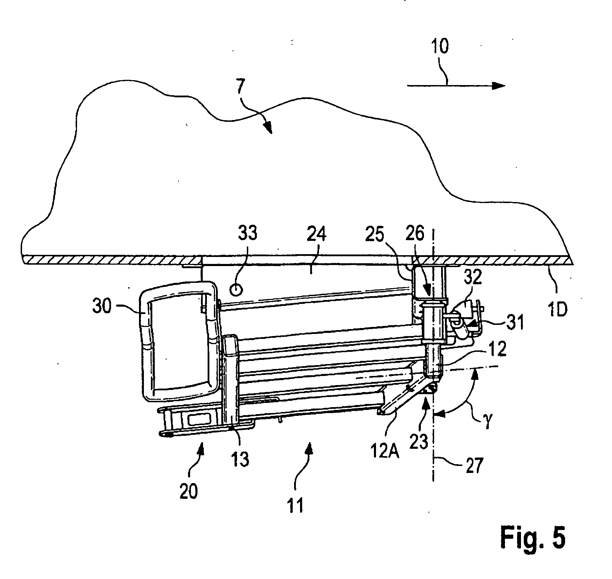

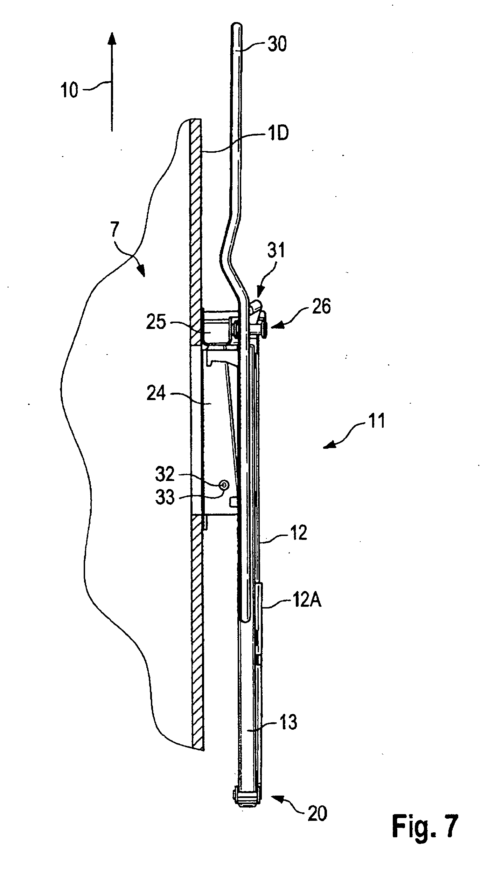

Dieses Problem wird bei der erfindungsgemäßen Leiter dadurch gelöst, dass die Schwenkachse 27 schräg auf der Ebene steht, in der die Holme und Sprossen der Leiter 11 liegen. Der von der Schwenkachse 27 und dieser Bezugsebene eingeschlossener Winkel γ ist größer als 90°, da die Holme und Sprossen der Leiter 11 gegenüber der Seitenwand 1 D des Maschinenrahmens 1 leicht verdreht sind (Fig.5), d.h. die Ebene der Leiter in Fahrtrichtung 10 leicht nach Innen schräggestellt ist. Dies wird konstruktiv dadurch erreicht, dass das leiterseitige Gelenkteil 26A der Gelenkverbindung 26 leicht schräg an dem oberen Ende des vorderen Holms 12 des oberen Teilstücks 11A der Leiter 11 befestigt ist. Wenn die Leiter 11 nun aus der vertikalen in die horizontale Position verschwenkt wird, legt sich die Leiter in der horizontalen Position an die Seitenwand 1D des Maschinenrahmen 1 an (Fig. 7). Dabei sind die Winkel β und γ derart bemessen, dass die Leiter in der horizontalen Position parallel zur Längsseite des Maschinenrahmens verläuft, d.h. in Fahrtrichtung 10 zeigt.

Alternativ kann in einer Art kinematischen Umkehr der Winkel β auch mit 90° angesetzt werden und entsprechend das leiterseitige Gelenkteil 26 A der Gelenkverbindung 26 derart schräg an dem oberen Ende des vordern Holms 12 des oberen Teilstücks 11A der Leiter 11 befestigt sein, dass die Leiter in der vertikalen Position gegenüber der Seitenwand 1D des Maschinenrahmens 1 in Aufstiegsrichtung nach vorne geneigt ist. Dann muss entsprechend der Winkel α größer als 90° gewählt werden und zwar so, dass die Leiter in der horizontalen Position an der Längsseite 1D des Maschinenrahmen 1 anliegt.

Die an einer Seite schwenkbar am Maschinenrahmen gelagerte Leiter 11 wird in der vertikalen Position dadurch gehalten, dass sich die Leiter mit einem Anschlagelement 28 an der horizontalen Konsole 24 des Maschinenrahmens 1 abstützt. Das Anschlagelement 28 ist an dem oberen Ende des hinteren Holm 13 des oberen Teilstück 11A der Leiter 11 befestigt. Es ist als Haken ausgebildet und greift in eine Ausnehmung 29 der horizontalen Konsole 24 des Maschinenrahmens 1 ein. Wenn die Leiter 11 während der Vorwärtsfahrt auf ein Hindernis trifft, kann sie leicht zurückschwenken, wobei das hakenförmige Anschlagelement 28 von der Konsole 24 abhebt. In der vertikalen Position hintergreift das Anschlagelement 28 jedoch den vorderen Rand der Konsole 24, so dass die Leiter 11 ausreichend gesichert ist.

In ähnlicher Weise wird die Leiter in der horizontalen Position gehalten, indem sich die Leiter 11 mit einem Anschlagdämpfer 32 in einer Bohrung 33 der horizontalen Konsole 24 des Maschinenrahmens 1 abstützt. Der Anschlagdämpfer 32 ist an dem vorderen Holm 12 des oberen Teilstück 11 A der Leiter 11 befestigt. Er ist als Parabelpuffer ausgebildet und greift in eine Bohrung 33 der horizontalen Konsole 24 des Maschinenrahmens 1 ein. Dadurch wird die Leiter in fünf von sechs möglichen Richtungen elastisch gedämpft fixiert. Um Fehlbedienung und Missbrauch auszuschließen, kann die Leiter 11 in dieser Lage auch mit geeigneten Mitteln fixiert werden.

An der Längsseite des hinteren Holms 13 des oberen Teilstücks 11A der Leiter 11 ist ein langgestrecktes Halteelement 30 befestigt, das sich in der vertikalen Position über das obere Ende der Leiter hinweg bis oberhalb des Fahrstandes 7 erstreckt. Das Halteelement 30 dient zum Einen als Aufstiegshilfe und zum Anderen als Hebel zum Verschwenken der Leiter zwischen der vertikalen und horizontalen Position. Wenn der Maschinenführer den Fahrstand bestiegen hat, kann er die Leiter vom Fahrstand aus zwischen der vertikalen und horizontalen Position verschwenken, indem er das Halteelement 30 greift. Es versteht sich von selbst, dass die Leiter vom Boden aus ebenfalls verschwenkt werden kann, z.B. um die Maschine transportfertig zu machen. Dazu greift der Bediener einfach an der Leiter 11 selbst an.

Die Schwenkbewegung der Leiter 11 zwischen der vertikalen und horizontalen Position und umgekehrt wird durch eine Gasdruckfeder 31 unterstützt, deren Kolben 31 A an dem vorderen Holm 12 des oberen Teilstücks 11 A oberhalb der Drehachse 27 und deren Zylinder 31B an der horizontalen Konsole 24 des Maschinenrahmens 1 unterhalb der Drehachse 27 der Gelenkverbindung 26 gelenkig befestigt ist.

## Patentansprüche

1. Straßenfräsmaschine mit
einem Maschinenrahmen (1) und einem Fahrwerk (2), das an der Vorder- und Rückseite des Maschinenrahmens (1) angeordnete Kettenlaufwerke (2A und 2B) aufweist,
einer unterhalb des Maschinenrahmens (1) angeordneten Fräseinrichtung (5) und
einem Fahrstand (7), der zwischen den an der Vorder- und Rückseite angeordneten Kettenlaufwerken (2A und 2B) angeordnet ist, wobei
die Straßenfräsmaschine mindestens eine unterhalb des Fahrstandes (7) am Maschinenrahmen (1) angeordnete Leiter (11) aufweist,
**dadurch gekennzeichnet, dass** die Leiter (11) an einer Längsseite (1C, 1D) des Maschinenrahmens (1) aus einer im Wesentlichen vertikalen Position um eine im Wesentlichen quer zur Fahrtrichtung (10) verlaufende Schwenkachse (27) schwenkbar gelagert ist, wobei die Leiter derart schwenkbar an einer Längsseite (1C, 1D) des Maschinenrahmens (1) gelagert ist, dass der unterhalb der Schwenkachse (27) liegende Teil der Leiter beim Anschlagen an ein Hindernis durch eine Schenkbewegung entgegen der Fahrtrichtung (10) ausweichen kann, wenn sich die Fräsmaschine in Fahrtrichtung bewegt.

2. Straßenfräsmaschine nach Anspruch 1, **dadurch gekennzeichnet, dass** die im Wesentlichen quer zur Fahrtrichtung verlaufende Schwenkachse (27) gegenüber einer Längsseite (1C, 1D) des Maschinenrahmens aus der Horizontalen heraus schräggestellt ist, so dass die Leiter (11) in der vertikalen Position gegenüber der Längsseite des Maschinenrahmens (1) geneigt ist.

3. Straßenfräsmaschine nach Anspruch 1, **dadurch gekennzeichnet, dass** die Schwenkachse (27) der Leiter (11) gegenüber der von der Leiter aufgespannten Ebene schräggestellt ist, so dass die Leiter (11) in der vertikalen Position gegenüber der Längsseite des Maschinenrahmens (1) geneigt ist.

4. Straßenfräsmaschine nach einem der Ansprüche 1 bis 3, **dadurch gekennzeichnet, dass** eine Gelenkverbindung (26) mit zwei um eine im Wesentlichen quer zur Fahrtrichtung verlaufende Drehachse (27) zueinander drehbaren Gelenkteilen (26A, 26B) vorgesehen ist, wobei der Maschinenrahmen (1) das eine Gelenkteil (26A) und die Leiter das andere Gelenkteil (26B) aufweist.

5. Straßenfräsmaschine nach Anspruch 4, **dadurch gekennzeichnet, dass** das Gelenkteil (26B) der Leiter (11) derart an der Leiter (11) angeordnet ist, dass die Drehachse (27) der Gelenkverbindung (26) in einem spitzen Winkel zu einer Ebene verläuft, in der die Leiter liegt, so dass die Leiter (11) sich beim Verschwenken aus der vertikalen Position an eine Längsseite (1C, 1D) des Maschinenrahmens (1) anlegt.

6. Straßenfräsmaschine nach einem der Ansprüche 1 bis 5, **dadurch gekennzeichnet, dass** die Leiter (11) an einer Längsseite (1C, 1D) des Maschinenrahmens (1) aus der vertikalen Position um einen im Wesentlichen rechten Winkel schwenkbar gelagert ist, so dass die Leiter (11) aus der vertikalen Position in eine horizontale Position schwenkbar ist.

7. Straßenfräsmaschine nach einem der Ansprüche 1 bis 6, **dadurch gekennzeichnet, dass** die Leiter (11) in die horizontale Position und/oder vertikale Position federnd vorgespannt ist.

8. Straßenfräsmaschine nach einem der Ansprüche 1 bis 7, **dadurch gekennzeichnet, dass** zumindest ein Teilstück (11A) der Leiter (11) einen in Fahrtrichtung (10) vorderen Holm (12) und einen in Fahrrichtung hinteren Holm (13) aufweist, an denen Sprossen (14, 15, 16, 17) befestigt sind, wobei der in Fahrtrichtung vordere Holm (12) der Leiter (11) an einer Längsseite des Maschinenrahmens (1) schwenkbar befestigt ist.

9. Straßenfräsmaschine nach Anspruch 8, **dadurch gekennzeichnet, dass** der in Fahrtrichtung hintere Holm (13) der Leiter (11) ein Anschlagelement (28) aufweist, das sich in der vertikalen Position der Leiter auf einem Stützelement (24) abstützt, das an einer Längsseite (1C, 1D) des Maschinenrahmens (1) befestigt ist.

10. Straßenfräsmaschine nach Anspruch 8, **dadurch gekennzeichnet, dass** der in Fahrtrichtung vordere Holm (12) der Leiter (11) ein Anschlagdämpfer (32) aufweist, der sich in der horizontalen Position der Leiter in einer Bohrung (33) abstützt und zentriert, die in einem Stützelement (24) an einer Längsseite (1C, 1D) des Maschinenrahmens (1) vorgesehen ist.

11. Straßenfräsmaschine nach einem der Ansprüche 1 bis 10, **dadurch gekennzeichnet, dass** die Leiter (11) ein oberes und ein unteres Teilstück (11A, 11B) aufweist, wobei das untere Teilstück (11B) schwenkbar an dem oberen Teilstück (11A) befestigt ist.

12. Straßenfräsmaschine nach Anspruch 11, **dadurch gekennzeichnet, dass** das obere Teilstück (11A) der Leiter (11) einen in Fahrtrichtung (10) vorderen Holm (12) und einen in Fahrtrichtung hinteren Holm (13) aufweist, an denen Sprossen (14, 15, 16, 17) befestigt sind, und das untere Teilstück (11B) der Leiter (11) eine an einem Holm (18) befestigte Sprosse (19) aufweist, wobei der Holm (18) des unteren Teilstücks (11B) aus einer ausgeklappten Position in eine an das obere Teilstück (11A) angeklappte Position schwenkbar ist, in der die Sprosse (19) des unteren Teilstücks (11B) an dem anderen der beiden Holme (12) des oberen Teilstücks (11A) anliegt.

13. Straßenfräsmaschine nach Anspruch 11 oder 12, **dadurch gekennzeichnet, dass** das untere Teilstück (11B) der Leiter (11) ein Befestigungselement (23) aufweist, mit dem das untere Teilstück (11B) in der eingeklappten Position an dem oberen Teilstück (11A) arretierbar ist.

14. Straßenfräsmaschine nach einem der Ansprüche 1 bis 13, **dadurch gekennzeichnet, dass** an der Leiter (11) ein Halteelement (30) befestigt ist, das in der vertikalen Position über die Leiter nach oben hinausragt.

## Claims

1. A road milling machine having
a machine frame (1) and an undercarriage (2) that includes chain drives (2A and 2B) which are disposed in the front and back of the machine frame (1),
a milling device (5) that is disposed below the machine frame (1), and
a control platform (7) that is disposed between the chain drives (2A and 2B) in the front and back, wherein
the road milling machine includes at least one ladder (11) that is disposed below the control platform (7) on the machine frame (1),
**characterized in that** the ladder (11) is pivotably supported on a longitudinal side (1C, 1D) of the machine frame (1) and movable about a pivot axis (27), which extends substantially diagonally relative to the direction of travel (10), from a substantially vertical position, wherein the ladder is pivotably supported on a longitudinal side (1C, ID) of the machine frame (1) in such a manner that the part of the ladder below the pivot axis (27) is able to avoid an obstacle, upon colliding with an obstacle, by a pivoting motion against the direction of travel (10), when the milling machine moves in the direction of travel.

2. The road milling machine according to claim 1, **characterized in that** the pivot axis (27), which extends substantially diagonally relative to the direction of travel, is inclined from the horizontal relative to a longitudinal side (1C, 1D) of the machine frame, such that the ladder (11) is inclined relative to the longitudinal side of the machine frame (1), when it is in the vertical position.

3. The road milling machine according to claim 1, **characterized in that** the pivot axis (27) of the ladder (11) is inclined relative to the plane that is created by the ladder, such that the ladder (11) is inclined relative to the longitudinal side of the machine frame (1), when it is in the vertical position.

4. The road milling machine according to any one of the claims 1 to 3, **characterized in that** an articulated connection (26) is provided having two articulated parts (26A, 26B) that are rotatable relative to each other about an axis of rotation (27) that extends substantially diagonally relative to the direction of travel, wherein the machine frame (1) includes the one articulated part (26A) and the ladder includes the other articulated part (26B).

5. The road milling machine according to claim 4, **characterized in that** the articulated part (26B) of the ladder (11) is disposed on the ladder (11) in such a way that the axis of rotation (27) of the articulated connection (26) extends at an acute angle relative to a plane in which the ladder is located, such that, upon pivoting from the vertical position, the ladder (11) comes to rest against a longitudinal side (1C, 1D) of the machine frame (1).

6. The road milling machine according to any one of the claims 1 to 5, **characterized in that** the ladder (11) is pivotably supported on a longitudinal side (1C, 1D) of the machine frame (1) and able to pivot from a vertical position about what is substantially a right angle, such that the ladder (11) can be pivoted from a vertical position into a horizontal position.

7. The road milling machine according to any one of the claims 1 to 6, **characterized in that** the ladder (11) is preloaded in a spring-type fashion in the horizontal position and/or vertical position.

8. The road milling machine according to any one of the claims 1 to 7, **characterized in that** at least one segment (11A) of the ladder (11) includes, seen relative to the direction of travel (10), one front rail (12) and, seen in the direction of travel, one back rail (13) and that have the rungs (14, 15, 16, 17) affixed thereto, wherein the front rail (12) of the ladder (11), seen in the direction of travel, is pivotably mounted on a longitudinal side of the machine frame (1).

9. The road milling machine according to claim 8, **characterized in that** the back rail (13) of the ladder (11), seen in the direction of travel, includes a stop element (28) that supports itself against a support element (24), when the ladder is in the vertical position, and the support element (24) is mounted on a longitudinal side (1C, 1D) of the machine frame.

10. The road milling machine according to claim 8, **characterized in that** the front rail (12) of the ladder (11) , seen in the direction of travel, includes a shock-absorbing stop (32) that supports itself and is centered in a bore hole (33), when the ladder is in the horizontal position, and the bore hole is provided in a support element (24) on a longitudinal side (1C, 1D) of the machine frame (1).

11. The road milling machine according to any one of the claims 1 to 10, **characterized in that** the ladder (11) includes a top and a bottom segment (11A, 11B), wherein the bottom segment (11B) is pivotably fastened to the top segment (11A).

12. The road milling machine according to claim 11, **characterized in that** the top segment (11A) of the ladder (11) includes a front rail (12), seen in the direction of travel (10), and a back rail (13), seen in the direction of travel, and said rails have rungs (14, 15, 16) affixed thereto, and the bottom segment (11B) of the ladder (11) includes a rung (19) that is affixed to a rail (18), wherein the rail (18) of the bottom segment (11B) can be pivoted from the folded out position to a position where it is folded against the top segment (11A), when the rung (19) of the bottom segment (11B) rests against the other one of the two rails (12) of the top segment (11A).

13. The road milling machine according to claim 11 or 12, **characterized in that** the bottom segment (11B) of the ladder (11) includes a fastener element (23) by which the bottom segment (11B) can be locked to the top segment (11A) in the folded in position thereof.

14. The road milling machine according to any one of the claims 1 to 13, **characterized in that** a retaining element (30) is fastened to the ladder (11) that projects upward beyond the top end of the ladder, when the ladder is in the vertical position.

## Revendications

1. Fraiseuse de route avec
un bâti de machine (1) et un mécanisme de roulement (2) qui présente des chenilles (2A et 2B) disposées sur les côtés avant et arrière du bâti de machine (1),
un dispositif de fraisage (5) disposé sous le bâti de machine (1) et
un poste de conduite (7) qui est disposé entre les chenilles (2A et 2B) disposées sur les côtés avant et arrière,
la fraiseuse de route présentant au moins une échelle (11) disposée sous le poste de conduite (7) sur le bâti de machine (1),
**caractérisée en ce que** l'échelle (11) est montée de manière à pouvoir pivoter sur un côté longitudinal (1C, 1D) du bâti de machine (1) depuis une position sensiblement verticale autour d'un axe de pivotement (27) s'étendant sensiblement transversalement au sens de la marche (10), l'échelle étant montée de manière pivotante sur un côté longitudinal (1C, 1D) du bâti de machine (1) de telle sorte que la partie de l'échelle se trouvant sous l'axe de pivotement (27) puisse dévier par un mouvement de pivotement dans le sens inverse au sens de la marche (10) lors de la butée contre un obstacle lorsque la fraiseuse de route se déplace dans le sens de la marche.

2. Fraiseuse de route selon la revendication 1, **caractérisée en ce que** l'axe de pivotement (27) s'étendant sensiblement transversalement au sens de la marche est en inclinaison par rapport à un côté longitudinal (1C, 1D) du bâti de machine depuis l'horizontale de sorte que l'échelle (11) soit inclinée dans la position verticale par rapport au côté longitudinal du bâti de machine (1).

3. Fraiseuse de route selon la revendication 1, **caractérisée en ce que** l'axe de pivotement (27) de l'échelle (11) est en inclinaison par rapport au plan défini par l'échelle de sorte que l'échelle (11) soit inclinée dans la position verticale par rapport au côté longitudinal du bâti de machine (1).

4. Fraiseuse de route selon l'une quelconque des revendications 1 à 3, **caractérisée en ce qu'**une liaison articulée (26) est prévue avec deux parties articulées (26A, 26B) rotatives l'une par rapport à l'autre autour d'un axe de rotation (27) s'étendant sensiblement transversalement au sens de la marche, le bâti de machine (1) présentant une partie articulée (26A) et l'échelle l'autre partie articulée (26B).

5. Fraiseuse de route selon la revendication 4, **caractérisée en ce que** la partie articulée (26B) de l'échelle (11) est disposée sur l'échelle (11) de telle manière que l'axe de rotation (27) de la liaison articulée (26) s'étende selon un angle aigu par rapport à un plan contenant l'échelle de sorte que l'échelle (11) se pose lors du pivotement depuis la position verticale sur un côté longitudinal (1C, 1D) du bâti de machine (1).

6. Fraiseuse de route selon l'une quelconque des revendications 1 à 5, **caractérisée en ce que** l'échelle (11) est montée de manière à pouvoir pivoter sur un côté longitudinal (1C, 1D) du bâti de machine (1) depuis la position verticale d'un angle sensiblement droit de sorte que l'échelle (11) puisse pivoter de la position verticale à une position horizontale.

7. Fraiseuse de route selon l'une quelconque des revendications 1 à 6, **caractérisée en ce que** l'échelle (11) est précontrainte de manière élastique dans la position horizontale et/ou verticale.

8. Fraiseuse de route selon l'une quelconque des revendications 1 à 7, **caractérisée en ce qu'**au moins un élément (11A) de l'échelle (11) présente un montant (12) avant dans le sens de la marche et un montant (13) arrière dans le sens de la marche, sur lesquels des barreaux (14, 15, 16, 17) sont fixés, le montant (12) avant dans le sens de la marche de l'échelle (11) étant fixé de manière pivotante sur un côté longitudinal du bâti de machine (1).

9. Fraiseuse de route selon la revendication 8, **caractérisée en ce que** le montant arrière (13) dans le sens de la marche de l'échelle (11) présente un élément de butée (28) qui s'appuie dans la position verticale de l'échelle sur un élément d'appui (24) qui est fixé sur un côté longitudinal (1C, 1D) du bâti de machine (1).

10. Fraiseuse de route selon la revendication 8, **caractérisée en ce que** le montant avant (12) dans le sens de la marche de l'échelle (11) présente un amortisseur de butée (32) qui s'appuie et se centre dans la position horizontale de l'échelle dans un perçage (33) qui est prévu dans un élément d'appui (24) sur un côté longitudinal (1C, 1D) du bâti de machine (1).

11. Fraiseuse de route selon l'une quelconque des revendications 1 à 10, **caractérisée en ce que** l'échelle (11) présente un élément supérieur et un élément inférieur (11A, 11B), l'élément inférieur (11B) étant fixé de manière pivotante sur l'élément supérieur (11A).

12. Fraiseuse de route selon la revendication 11, **caractérisée en ce que** l'élément supérieur (11A) de l'échelle (11) présente un montant (12) avant dans le sens de la marche et un montant (13) arrière dans le sens de la marche, sur lesquels des barreaux (14, 15, 16, 17) sont fixés, et l'élément inférieur (11B) de l'échelle (11) présente un barreau (19) fixé sur un montant (18), le montant (18) de l'élément inférieur (11B) pouvant pivoter d'une position dépliée à une position rabattue sur l'élément supérieur (11A), dans laquelle le barreau (19) de l'élément inférieur (11B) repose contre l'autre des deux montants (12) de l'élément supérieur (11A).

13. Fraiseuse de route selon la revendication 11 ou 12, **caractérisée en ce que** l'élément inférieur (11B) de l'échelle (11) présente un élément de fixation (23) avec lequel l'élément inférieur (11B) peut être arrêté dans la position repliée sur l'élément supérieur (11A).

14. Fraiseuse de route selon l'une quelconque des revendications 1 à 13, **caractérisée en ce qu'**un élément de retenue (30) qui dépasse dans la position verticale de l'échelle vers le haut, est fixé sur l'échelle (11).
